(19) Europäisches Patentamt
European Patent Office
Office européen des brevets

(11) Veröffentlichungsnummer: **0 307 757 A2**

# (12) EUROPÄISCHE PATENTANMELDUNG

(21) Anmeldenummer: **88114484.4**

(51) Int. Cl.4: **C08G 18/76 , C08G 18/77**

(22) Anmeldetag: **05.09.88**

(30) Priorität: **16.09.87 DE 3730985**

(43) Veröffentlichungstag der Anmeldung:
**22.03.89 Patentblatt 89/12**

(84) Benannte Vertragsstaaten:
**CH DE FR GB IT LI NL**

(71) Anmelder: **BAYER AG**
**Konzernverwaltung RP Patentabteilung**
**D-5090 Leverkusen 1 Bayerwerk(DE)**

(72) Erfinder: **Mormann, Werner, Prof. Dr.**
**Zum Wolfsloch 30**
**D-5910 Kreuztal(DE)**
Erfinder: **Brahm, Barbara**
**Erzstrasse 40**
**D-5900 Siegen(DE)**
Erfinder: **Brahm, Martin**
**Erzstrasse 40**
**D-5900 Siegen(DE)**

(54) **Verfahren zur Herstellung von Polyurethanen mit LC-Eigenschaften und zur Durchführung dieses Verfahrens geeignete Diisocyanate.**

(57) Ein neues Verfahren zur Herstellung von Polyurethanen mit LC-Eigenschaften unter Verwendung von speziellen, mindestens zwei Phenylenreste und mindestens eine Carbonsäureestergruppe aufweisenden aliphatischen oder aromatischen Isocyanaten und für dieses Verfahren als Ausgangsmaterialien geeignete Diisocyanate.

EP 0 307 757 A2

Xerox Copy Centre

# Verfahren zur Herstellung von Polyurethanen mit LC-Eigenschaften und zur Durchführung dieses Verfahrens geeignete Diisocyanate

Die vorliegende Erfindung betrifft ein neues Verfahren zur Herstellung von Polyurethanen mit LC-Eigenschaften unter Verwendung von ausgewählten Polyhydroxylverbindungen und ausgewählten Diisocyanaten und einige für dieses Verfahren geeignete Diisocyanate.

Es wurde überraschenderweise gefunden, daß man Polyurethane mit wertvollen LC-Eigenschaften (LC = "liquid crystal") dann erhält, wenn man bestimmte organische Diisocyanate der nachstehend näher beschriebenen Art mit organischen Polyhydroxylverbindungen der nachstehend näher beschriebenen Art unter Polyurethanbildung zur Reaktion bringt.

Gegenstand der Erfindung ist ein Verfahren zur Herstellung von Polyurethanen mit LC-Eigenschaften durch Umsetzung von

a) organischen Polyhydroxylverbindungen

mit

b) organischen Diisocyanaten

unter Einhaltung eines NCO/OH-Äquivalentverhältnisses von 0,9:1 bis 1,1:1, dadurch gekennzeichnet, daß man als Komponente b) mindestens zwei Phenylenreste und mindestens eine Carbonsäureestergruppe aufweisende aliphatische oder aromatische Diisocyanate verwendet, mit der Maßgabe, daß die Estergruppen im Falle der aliphatischen Diisocyanate die die Isocyanatgruppen tragenden aliphatischen Reste mit einem Phenylenrest verknüpfen und im Falle der aromatischen Diisocyanate zwischen zwei Phenylenresten angeordnet sind.

Gegenstand der Erfindung sind auch einige bevorzugte, zur Durchführung des erfindungsgemäßen Verfahrens geeignete Diisocyanate der allgemeinen Formel

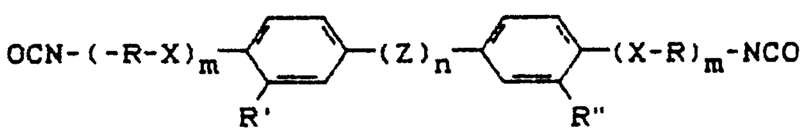

in welcher

R für einen Alkylenrest mit 2 bis 11 Kohlenstoffatomen steht,

X für eine Gruppierung der Formel -CO-O- oder -O-CO-steht,

Z für ein Brückenglied der Formel -N=N-, -CH=CH-, -CO-O-, oder der allgemeinen Formeln

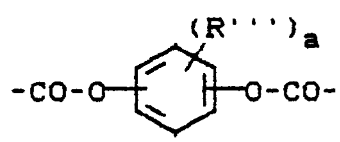

oder

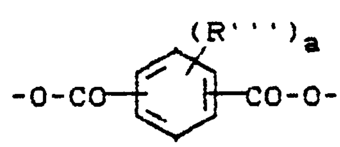

steht,

R′, R″, R‴ - gleich oder verschieden - für Wasserstoff, Cl, Br, $NO_2$, vorzugsweise Chlor, einen $C_1$-$C_{20}$-Alkylrest, $C_1$-$C_{20}$-Alkoxy, $C_1$-$C_{20}$-Alkoxycarbonyl oder einen verzweigten $C_1$-$C_4$-Alkylrest stehen,

a = 1, 2 oder 3

und

m und n gleich oder verschieden sind und für 0 oder 1 stehen,

mit der Maßgabe, daß im Falle von m = 0 n für 1 und Z für einen Rest der beiden letztgenannten allgemeinen Formeln stehen, und daß im Falle von n = 0 m für 1 steht.

Für das erfindungsgemäße Verfahren geeignete Polyhydroxylverbindungen a) sind beliebige, aus der Polyurethan-Chemie an sich bekannte organische Polyhydroxylverbindungen des Molekulargewichtsbereichs 62 bis 6.000, d.h. es kommen sowohl einfache Alkanpolyole des Molekulargewichtsbereichs 62 bis 250, die gegebenenfalls Ether- oder Esterbrücken aufweisen, als auch höhermolekulare Polyhydroxylverbindungen, insbesondere die aus der Polyurethan-Chemie bekannten Polyester- und Polyetherpolyole in Betracht.

Besonders bevorzugt werden beim erfindungsgemäßen Verfahren als Komponente a) Alkanpolyole des Molekulargewichtsbereichs 62 bis 250, vorzugsweise 90 bis 200, insbesondere die entsprechenden Alkandiole verwendet. Geeignete derartige Polyole sind beispielsweise Ethylenglykol, 1,2- und 1,3-Dihydroxypropan, 1,2-, 1,3-, 1,4-und 2,3-Dihydroxybutan, wie verschiedenen isomeren Dihydroxypentane, -hexane, -octane, -decane oder -dodecane, Glycerin oder Trimethylolpropan. Zu den bevorzugten, als Komponente a) geeigneten Polyhydroxylverbindungen gehören 1,4-Dihydroxybutan, 1,6-Dihydroxyhexan, 3-Methyl-1,5-pentandiol und Neopentylglykol, Diethylenglykol, Triethylenglykol, Tetraethylenglykol, Dipropylenglycol oder Tripropylenglykol. Gut geeignet sind auch phenolische oder vorzugsweise alkoholische Hydroxylgruppen aufweisende Diole der allgemeinen Formel

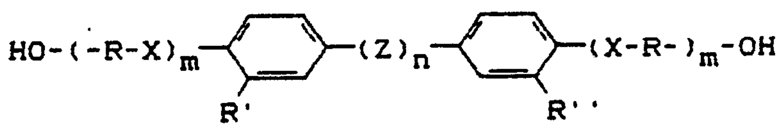

für welche
R, R′, R″, X, Z, m und n die bereits oben im Zusammenhang mit den Diisocyanaten genannte Bedeutung haben, wobei hier jedoch die einschränkende Maßgabe keine Gültigkeit hat.

Bei der Komponente b) handelt es sich um spezielle, mindestens eine Estergruppe und mindestens zwei Phenylenringe aufweisende aliphatische oder aromatische Diisocyanate der obengenannten Art.

Besonders gut geeignete aromatische Diisocyanate sind beispielsweise

1. 4-(4-Isocyanatophenoxycarbonyl)-phenylisocyanat
2. 1,4-Bis-(4-isocyanatophenoxycarbonyl)-benzol
3. 1,3-Bis-(4-isocyanatophenoxycarbonyl)-benzol

und

4. 1,4-Bis-(4-isocyanatobenzoyloxy)-benzol.

Geeignete aliphatische Diisocyanate sind

5. 4,4-Bis-(ω-isocyanatoalkanoyloxy)-biphenyle, insbesondere solche mit 3 bis 6 Kohlenstoffatomen im Alkanoylrest wie z.B. 4,4′-Bis-(3-Isocyanatopropanoyloxy)-biphenyl oder 4,4′-Bis-(6-isocyanatohexanoyloxy)biphenyl.

Das unter 1. genannte Diisocyanat ist aus DE-AS 1 085 869 bereits bekannt. Bei den unter 2 bis 5 genannten Diisocyanaten handelt es sich um neue Verbindungen, für die im Rahmen der obengenannten allgemeinen Formel Stoffschutz beansprucht wird, und die die besonders bevorzugten erfindungsgemäßen Diisocyanate darstellen.

Die Herstellung der unter (4) und (5) genannten Diisocyanate gelingt beispielsweise durch Umsetzung der entsprechenden Isocyanato-carbonsäurechloride mit den entsprechenden O-silylierten Bisphenolen, während die Herstellung der unter (2) und (3) genannten Diisocyanate beispielsweise durch analoge Umsetzung von Terephthalsäuredichlorid bzw. Isophthalsäuredichlorid mit O-silyliertem 4-Isocyanatophenol erfolgen kann. Die Herstellung der anderen, unter die obige allgemeine Formel fallenden, erfindungsgemäßen Diisocyanate gelingt in Analogie zu diesen Verfahrensweisen unter Verwendung der den Diisocyanaten entsprechenden Ausgangsmaterialien.

Die für diese Umsetzungen erforderlichen einfachen Dicarbonsäurechloride stellen altbekannte chemische Verbindungen dar. Die Isocyanatocarbonsäurechloride, d.h. das 4-Isocyanatobenzoesäurechlorid bzw. die Isocyanatoalkancarbonsäurechloride stellen ebenfalls literaturbekannte Verbindungen dar und sind beispielsweise in J. Org. Chem. 31 (1966) S. 142 ff. beschrieben.

Die Herstellung von silylierten Hydroxylgruppen aufweisenden organischen Verbindungen ist beispielsweise von M-Lalonde und C.H. Chan in Synthesis (1985), S. 817-845 beschrieben worden. Nach dieser Methode kann beispielsweise die Herstellung von O-silylierten Bisphenolen beispielsweise von 1,3- oder

1,4-Dihydroxybenzol oder von 4,4′-Dihydroxy-biphenyl erfolgen. Dies bedeutet, daß die als Ausgangsmaterial eingesetzten, zweiwertigen Phenole mit Hexamethyldisilazan oder mit Chlorsilanen wie Trimethylchlorsilan zu den entsprechenden O-Trimethylsilan-substituierten Verbindungen umgesetzt werden können.

Die Herstellung der O-silylierten Isocyanatophenole, beispielsweise des O-silylierten 4-Isocyanatophenols kann beispielsweise durch Umsetzung der entsprechenden O-silylierten Aminophenole mit überschüssigen Mengen an unter den Bedingungen der Umsetzung nicht flüchtigen organischen Polyisocyanaten bei bis zu 300°C, vorzugsweise bis zu 200°C liegenden Temperaturen, gegebenenfalls unter vermindertem Druck erfolgen, wobei die O-silylierten Isocyanate als bei dieser Umsetzung anfallende Destillate erhalten werden.

Die Herstellung der O-silylierten Aminophenole kann beispielsweise dergestalt erfolgen, daß man die Aminophenole mit Hexamethyldisilazan (HMDS) unter Einhaltung eines Molverhältnisses von Hydroxylgruppen zu HMDS von 1:0,5 bis 1:0,6 in Gegenwart einer katalytischen Menge an Trimethylchlorsilan auf Temperaturen von bis zu 170 °C, vorzugsweise 50 bis 170°C, erwärmt, wobei die selektive Silylierung der Hydroxylgruppe unter Ammoniakabspaltung erfolgt.

Bei den nichtflüchtigen Polyisocyanaten handelt es sich beispielsweise um nichtdestillierbare Polyisocyanate oder um hochsiedende Polyisocyanate, deren Siedepunkt bei dem jeweils zur Anwendung gelangenden Druck vorzugsweise mindestens 20°C über dem Siedepunkt des O-silylierten Isocyanats liegt. Gut geeignet ist hierfür beispielsweise 4,4′-Diisocyanatodiphenylmethan. Bei der Umsetzung werden die Polyisocyanate in mindestens äquimolaren Mengen eingesetzt, was bedeutet, daß für jede Aminogruppe des Aminophenols mindestens 1, vorzugsweise mindestens 1,1 Isocyanatgruppen des Polyisocyanats zur Verfügung stehen. Ein bis zu 20-fach äquivalenter Überschuß an Isocyanatengruppen kann selbstverständlich eingesetzt werden, obwohl derart hohe und gegebenenfalls noch darüberliegende Überschüße zur Wirtschaftlichkeit der Umsetzung nicht beitragen können.

Zur Herstellung der O-silylierten Isocyanatophenole kann man beispielsweise die nicht-flüchtige Polyisocyanatkomponente in einem geeigneten, mit Rührer oder Destillationsbrücke versehenen Destillationsgefäß vorlegen und das O-silylierte Aminophenol innerhalb des Temperatur bereichs von 20 bis 200°C, vorzugsweise zunächst bei 100 bis 140°C, unter Rühren portionsweise zugibt, man beendeter Zugabe allmählich auch bis zu 200°C erwärmt und gegebenenfalls unter Anlegen von Vakuum das sich spontan bildende O-silylierte Isocyanatophenol als Destillat gewinnt.

Zur Herstellung der oben unter (1), (2), (3) und (4) genannten Diisocyanate kann beispielsweise so vorgegangen werden, daß man das entsprechende Isocyanatocarbonsäurechlorid bzw. das entsprechene Dicarbonsäuredichlorid mit einer äquivalenten Menge entsprechenden bissilylierten Diphenols bzw. einer äquivalenten Menge an O-silyliertem 4-Isocyanatophenol vermischt, die Mischung in einem geeigneten Lösungsmittel wie beispielsweise o-Dichlorbenzol löst, der so erhaltenen Lösung eine katalytische Menge eines geeigneten Beschleunigers (eine Lewissäure wie beispielsweise Titantetrachlorid oder Zinkchlorid oder eine schwache Base wie beispielsweise 4-Dimethylaminopyridin) hinzufügt und die Reaktionsmischung auf ca. 160 bis 170°C erhitzt, wobei das bei der Umsetzung gebildete Trimethylchlorsilan abdestilliert. Das Ende der Umsetzung kann an der Beendigung der Bildung von Trimethylchlorsilan erkannt werden. Die anfallenden Diisocyanate können entweder durch Vakuumdestillation oder durch Umkristallisieren in einem geeigneten Lösungsmittel wie beispielsweise Heptan oder o-Dichlorbenzol gereinigt werden.

Die oben unter (5) genannten Diisocyanate können beispielsweise dergestalt hergestellt werden, daß man das entsprechende Isocyanatocarbonsäurechlorid mit einer äquivalenten oder geringfügig unteräquivalenten Menge bissilyliertem 4,4′-Dihydroxy-biphenyl vermischt, die Mischung mit einer katalytischen Menge an 4-Dimethylaminopyridin versetzt und das Reaktionsgemisch, gegebenenfalls in Gegenwart eines Lösungsmittels wie o-Dichlorbenzol oder auch in Abwesenheit eines Lösungsmittels auf 90 bis 150°C erhitzt, wobei das sich bildende Trimethylchlorsilan mit Hilfe von Vakuum aus der Reaktionslösung entfernt wird. Die Reinigung des gebildeten Diisocyanats kann, gewünschtenfalls, ebenfalls durch Vakuumdestillation oder durch Umkristallisieren aus einem geeigneten Lösungsmittel erfolgen. Die zu erhaltenen Diisocyanate (1) bis (5) weisen bereits LC-Eigenschaften auf.

Zur Durchführung des erfindungsgemäßen Verfahrens, d.h. zur Herstellung der Polyurethane werden die Ausgangskomponente a) und b) bei Temperaturen von 20 bis 200°C, vorzugsweise 85 bis 140°C unter Einhaltung eines NCO:OH-Äquivalentverhältnisses von 0,9:1 bis 1,1:1, vorzugsweise unter Verwendung von äquivalenten Mengen der Ausgangsmaterialien, miteinander zur Reaktion gebracht, wobei die Umsetzung vorzugsweise in Gegenwart eines geeigneten Lösungsmittels wie beispielsweise Dimethylformamid, Dimethylacetamid, N-Methylpyrrolidon, Tetramethylharnstoff, Chlorbenzol, o-Dichlorbenzol, Anisol, Tetrahydrofuran, Dioxan oder Gemischen derartiger Lö sungsmittel durchgeführt wird. Die Gewinnung der Polyurethane erfolgt dann beispielsweise dergestalt, daß man die resultierende Lösung in Methanol einträgt, das ausfallende Polymer abfiltriert und trocknet.

Bei den erfindungsgemäßen Verfahrensprodukten handelt es sich um Polyurethane, die oberhalb der Schmelztemperatur anisotrope Phasen mit LC-Eigenschaften aufweisen. Bezüglich der diesbezüglichen Einzelheiten wird auf den nachstehenden Beispielteil verwiesen.

In den nachfolgenden Beispielen beziehen sich alle Prozentangaben, soweit nichts anderslautendes ausgeführt, auf Gewichtsprozente.

## Beispiele

### 1. Herstellung von O-silyliertem 4-Isocyanatophenol

#### 1.1 O-silyliertes 4-Aminophenol

In einem ausgeheizten 500 ml Dreihalskolben mit Magnetrührstab, Innenthermometer, Tropftrichter und Rückflußkühler mit Blasenzähler, Trockenrohr und Gasableitung werden 1 Mol 4-Aminophenol vorgelegt und 0,55 Mol Hexamethyldisilazan zügig zugetropft. Nach Zugabe von drei Tropfen Trimethylmonochlorsilan als Katalysator wird die heterogene Flüssigkeitsmischung langsam erwärmt. Bei 50 bis 55 °C kann die erste Ammoniakentwicklung beobachtet werden, die bei 130 °C sehr heftig wird. Die Temperatur wird bis zum Ende der Gasentwicklung auf 140 bis 170 °C gesteigert. Dann wird die homogene Flüssigkeit zur Reinigung über eine verspiegelte Vigreuxkolonne rektifiziert.

#### 1.2 Herstellung des Isocyanats

In einem 500 ml Planschliffkolben mit Magnetrührstab, Innenthermometer, Tropftrichter und Destillationsbrücke, sowie einem 100 ml Stickstoffkolben als Vorlage werden 500 g (2 Mol) 4,4′-Diisocyanatodiphenylmethan eingewogen und unter Argon aufgeschmolzen. Bei 110 bis 120 °C werden 0,4 Mol des silylierten Aminophenols aus 1.1 langsam zugetropft, wobei sich weiße Nebel bilden. Nach beendeter Zugabe des Amins wird die Apparatur unter weiterem Aufheizen bis auf 200 °C vorsichtig evakuiert. Die überdestillierende farblose Flüssigkeit wird anschließend fraktioniert.
Ausbeute: 95 %
Kp.: 52 - 53 °C (0,24 mbar)
$n_D^{20}$ : 1,5032
IR-Spektrum: 2280 $cm^{-1}$ (N = C = O)

| | | |
|---|---|---|
| $^1$H-NMR-Spektrum: | 6,92 (m); 4 : | 0,31 ppm (s) 9 |

Elementaranalyse(%):
Berechnet:
C 58,0 H 6,3
Gefunden:
C 58,4 H 6,2 N 7,2

### 2. Herstellung von aromatischen Esterdiisocyanaten (allgemeine Vorschrift)

In einem ausgeheizten 25 ml-Kolben mit Mikrodestillationsaufsatz werden 0,025 Mol des dem jeweiligen Esterdiisocyanat entsprechenden Isocyanatocarbonsäurechlorids bzw. Dicarbonsäuredichlorids und eine äquivalente Menge an O-silyliertem 4-Aminophenol vorgelegt. Als Lösungsmittel werden 6 ml o-Dichlorbenzol hinzugefügt und die Reaktionsmischung mit dem betreffenden Katalysator auf 165 °C bis zur Beendigung der Bildung von Trimethylchlorsilan erwärmt.

Zur Aufarbeitung und Reinigung wird das entsprechende Esterdiisocyanat bei einem Druck von $10^{-4}$ mbar destilliert oder aus einem geeigneten Lösungsmittel umkristallisiert. Bezüglich weiterer Einzelheiten wird auf die nachstehende Tabelle verwiesen.

| Nr. | Diisocyanat | Kat. | Heiztemperatur bei Kugelrohrdestillation in °C | umkristallisiert aus | Ausbeute % | Schmelzverhalten in °C | IR-Banden in $cm^{-1}$ | Elementaranalyse ber. gef. (%) |
|---|---|---|---|---|---|---|---|---|
| 1 | 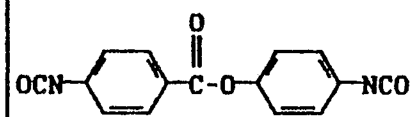 | $TiCl_3$ | 180-200 | | 68 | K 117,5<br>n 150 i | 2320[1],<br>1740 | C: 64,3 64,4<br>H: 2,9 2,9<br>N: 10,0 10,0 |
| 2 | 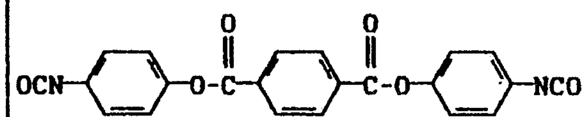 | DMAP[3)] | | o-Dichlorbenzol | 34<br>30 | K 180n<br>)300 $d^c$ | 2340+<br>2300[1],<br>1730<br>2280[2],<br>1730 | |
| 3 | 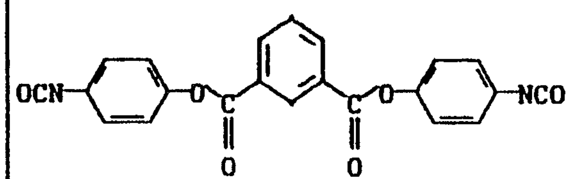 | DMAP[3)] | | Heptan | 81<br>85 | K 160a<br>)300 $d^c$ | 2310[1],<br>1735 | |
| 4 | 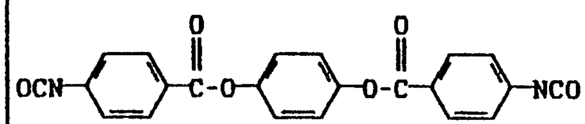 | $TiCl_3$ | | o-Dichlorbenzol | 48 | K 185n<br>)300 $d^c$ | 2320[1],<br>1735 | |

K: kristallin; a: anisotrop; i: isotrop; n: nematisch; $d^c$: Zersetzung im anisotropen Bereich;
1) in Nujol; 2) als Lösung in o-Dichlorbenzol; 3) 4-Dimethylaminopyridin

| Nr. | Diisocyanat | Kat. | Heiztemperatur bei Kugelrohrdestillation in °C | umkristallisiert aus | Ausbeute % | Schmelzverhalten in °C | IR-Banden in $cm^{-1}$ | Elementaranalyse ber. gef. (%) |
|---|---|---|---|---|---|---|---|---|
| 5 | 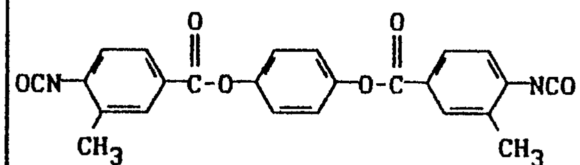 | $H_2SO_4$ | | o-Dichlorbenzol | 70 | K 177 a 230 i | 2290 , 1725 | C: 67,29 67,06<br>H: 3,76 4,01<br>N: 6,54 6,45 |
| 6 | 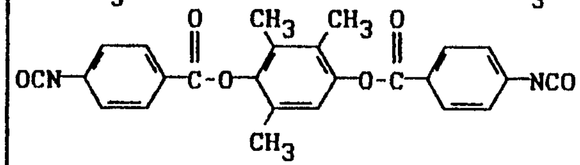 | $H_2SO_4$ | | o-Dichlorbenzol | 50 | K 185 a )300 i | 2280 1730 | |
| 7 | 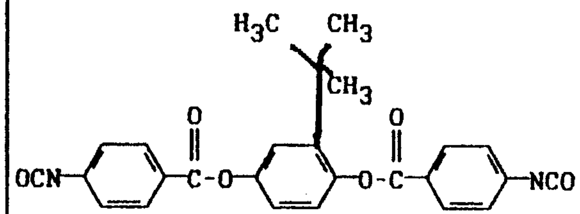 | $H_2SO_4$ | | o-Dichlorbenzol | 70 | K 188a 165 i | 2295 1730 | |

K: kristallin; a: anisotrop; i: isotrop; n: nematisch; $d^c$: Zersetzung im anisotropen Bereich;
1) in Nujol; 2) als Lösung in o-Dichlorbenzol; 3) 4-Dimethylaminopyridin

3. Aliphatisch-aromatische Esterdiisocyanate (allgemeine Vorschrift)

In einem ausgeheizten 100 ml Stickstoffkolben mit Mikro-Destille wird das dem jeweiligen Diisocyanat entsprechende ω-Isocyanatocarbonsäurechlorid zusammen mit O,O-bissilyliertem 4,4′-Dihydroxydiphenyl und einer katalytischen Menge an 4-Dimethylaminopyridin vorgelegt und anschließend auf 90 bis 130 °C erhitzt, wobei gleichzeitig das sich bildende Trimethylchlorsilan unter Anlegen von Vakuum destillativ entfernt wird. Anschließend werden die resultierenden Esterdiisocyanate durch Vakuum-Dünnschichtdestillation gereinigt.

3.1 4,4′-Bis-(3-isocyanatopropanoyloxy)-biphenyl

Aus 35 g (0,26 Mol) 3-Isocyanatopropansäurechlorid und 30 g (0,09 Mol) 4,4′-Bis-(trimethylsiloxy)-biphenyl
Reaktionszeit: 19 h bei 90 bis 130 °C
Ausbeute: 22,3 g (= 65 % der Theorie)
Fp (Toluol): K 135 °C a 160 °C i
IR-Spektrum (Nujol): 2280 (N=C=O), 1750 $cm^{-1}$ (C=O)

3.2 4,4′-Bis-(6-isocyanatohexanoyloxy)-biphenyl

Aus 35 g (0,2 Mol) 6-Isocyanatohexansäurechlorid und 23 g (0,07 Mol) 4,4′-Bis-(trimethylsiloxy)-biphenyl
Reaktionszeit: 45 h bei 115 °C
Ausbeute: 32,5 g (= 100 % der Theorie)
Fp (Dünnschichtverdampfer 200 °C, 0,1 mbar): K 70,5 °C a 79,5 °C i
IR-Spektrum: 2280 (N=C=O), 1760 $cm^{-1}$ (C=O)

4. Erfindungsgemäßes Verfahren (allgemeine Vorschrift)

In einen ausgeheizten 25 ml Stickstoffkolben werden ca. 5 ml N,N-Dimethylacetamid destilliert und anschließend das jeweilige Diol und das jeweilige Esterdiisocyanat eingewogen. Anschließend läßt man bei 85 bis 140 °C reagieren. Nach beendeter Reaktion (IR-Spektrum) wird das Polymer aus Methanol ausgefällt und getrocknet.

4.1 Polyurethan aus 0,5 g (1,08 mMol) 4,4′-Bis-(6-isocyanatohexanoyloxy)-biphenyl und 0,097 g (1,08 mMol) 1,4-Butandiol

Reaktionszeit: 10 h bei 80 bis 140 °C
Ausbeute: 0,43 g (= 73 % der Theorie)
K 158 a 167,9 i

4.2 Polyurethan aus 0,822 g (2,93 mMol) 4,4′-Diisocyanato-benzoesäurephenylester und 0,347 g (2,93 mMol) 3-Methyl-1,5-pentandiol

Reaktionszeit: 30 Minuten bei 125 °C
Ausbeute: 1 g (= 86 % der Theorie)

Schmelzverhalten (Mikroskop):

K 260 a 265 i (flüssig-kristalliner Bereich stark unterkühlbar
DSC: 140 °C (exotherm, Rekristallisation)
259 °C (endotherm, Schmelzpunkt)
380 °C (endotherm mit anschließender exothermer Zersetzung)

4.3 Polyurethan aus 0,5 g (2,93 mMol) 4,4′-Bis-(6-isocyanatohexanoyloxy)-biphenyl und 0,112 g (1,08 mMol) Neopentylglykol

Reaktionszeit: 10 h bei 80 bis 140 °C
Ausbeute: 0,48 g ( = 78 % der Theorie)

Schmelzverhalten (Mikroskop):

K 103,8 a 119,5 i
DSC: 102 °C (endotherm, Schmelzpunkt)
121 °C (endotherm)
ab 310 °C (endotherm mit anschließender exothermer Zersetzung).

4.4 Polyurethan aus 657,5 mg (0,1535 mmol) Phenylen-1,4-bis(3-methyl-4-isocyanatobenzoat) und 181,4 mg (0,1535 mmol) 3-Methyl-1,5-pentandiol.

Reaktionszeit: 3 h bei 100 °C
Ausbeute: 70 %

Schmelzverhalten (Mikroskop):

K 226 a 230 i (flüssigkristalliner Bereich stark unterkühlbar).

## Ansprüche

1. Verfahren zur Herstellung von Polyurethanen mit LC-Eigenschaften durch Umsetzung von
a) organischen Polyhydroxylverbindungen
mit
b) organischen Diisocyanaten
unter Einhaltung eines NCO/OH-Äquivalentverhältnisses von 0,9:1 bis 1,1:1, dadurch gekennzeichnet, daß man als Komponente b) mindestens zwei Phenylenreste und mindestens eine Carbonsäureestergruppe aufweisende aliphatische oder aromatische Diisocyanate verwendet, mit der Maßgabe, daß die Estergruppen im Falle der aliphatischen Diisocyanate die die Isocyanatgruppen tragenden aliphatischen Reste mit einem Phenylenrest verknüpfen und im Falle der aromatischen Diisocyanate zwischen zwei Phenylenresten angeordnet sind.

2. Verfahren gemäß Anspruch 1, dadurch gekennzeichnet, daß man als Komponente b) Diisocyanate, ausgewählt aus der Gruppe bestehend aus 4-(4-Isocyanatophenoxycarbonyl)-phenylisocyanat, 1,4-Bis-(4-isocyanatophenoxycarbonyl)-benzol, 1,3-Bis-(4-isocyanatophenoxycarbonyl)-benzol, 1,4-Bis-(4-Isocyanatobenzoyloxy)-benzol und 4,4′-Bis-(ω-isocyanatoalkanoyloxy)-diphenyl verwendet.

3. Verfahren gemäß Anspruch 1 und 2, dadurch gekennzeichnet, daß man als Komponente a) Alkandiole des Molekulargewichtsbereichs 62 bis 250 verwendet.

4. Zur Durchführung des Verfahrens gemäß Anspruch 1 bis 3 geeignete Diisocyanate der allgemeinen Formel

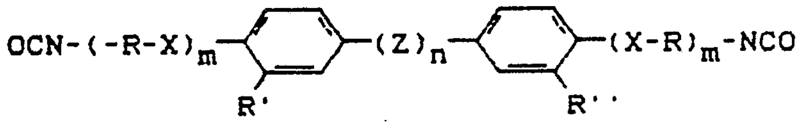

in welcher
R für einen Alkylenrest mit 2 bis 11 Kohlenstoffatomen steht,
X für eine Gruppierung der Formel -CO-O oder -O-CO-steht,
Z für ein Brückenglied der Formel -N=N-, -CH=CH-, -CO-O-, oder der allgemeinen Formeln

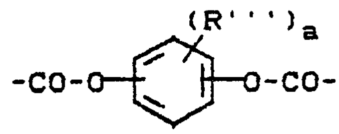

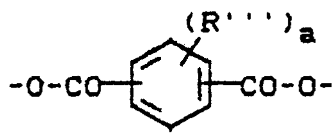

steht,
$R'$, $R''$, $R'''$ - gleich oder verschieden -für Wasserstoff, Cl, Br, $NO_2$, vorzugsweise Chlor, einen $C_1$-$C_{20}$-Alkylrest, $C_1$-$C_{20}$-Alkoxy, $C_1$-$C_{20}$-Alkoxycarbonyl oder einen verzweigten $C_1$-$C_4$- Alkylrest stehen,
a = 1, 2 oder 3
und
m und n gleich oder verschieden sind und für 0 oder 1 stehen,
mit der Maßgabe, daß im Falle von m = 0 n für 1 und Z für einen Rest der beiden letztgenannten allgemeinen Formeln stehen, und daß im Falle von n = 0 m für 1 steht.

5. Diisocyanate gemäß Anspruch 4, ausgewählt aus der Gruppe bestehend aus der Gruppe bestehend aus 1,4-Bis-(4-isocyanatophenoxycarbonyl)-benzol, 1,3-Bis-(4-isocyanatophenoxycarbonyl)-benzol, 1,4-Bis-(4-Isocyanatobenzoyloxy)-benzol und 4,4′-Bis-(ω-isocyanatoalkanoyloxy)-diphenyl.